(19) Europäisches Patentamt
European Patent Office
Office européen des brevets

(11) Publication number: **0 350 800**
**A2**

(12) **EUROPEAN PATENT APPLICATION**

(21) Application number: 89112421.6

(22) Date of filing: 07.07.89

(51) Int. Cl.4: H01F 1/08 , H01F 1/06 , H01F 1/113 , H01F 41/02

(30) Priority: 14.07.88 JP 173792/88
24.04.89 JP 101556/89

(43) Date of publication of application:
17.01.90 Bulletin 90/03

(84) Designated Contracting States:
BE CH DE FR GB IT LI NL SE

(71) Applicant: IDEMITSU KOSAN COMPANY LIMITED
No. 1-1, 3-chome, Marunouchi Chiyoda-ku
Tokyo(JP)

(72) Inventor: Hiroshi, Kawato c/o Idemitsu Kosan Co. Ltd.
1280, Kamiizumi Sodegaura-machi
Kimitsu-gun Chiba-ken(JP)

(74) Representative: Türk, Gille, Hrabal
Bruckner Strasse 20
D-4000 Düsseldorf 13(DE)

(54) **Magnetic composition, magnetic powder material and method for preparing magnet.**

(57) There are disclosed magnetic compositions which comprise a polymer having a repeating unit represented by the formula:

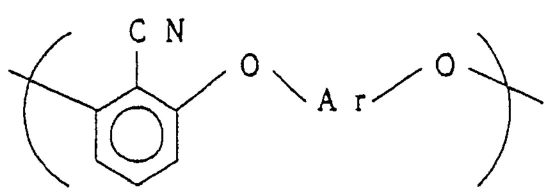

wherein Ar is the same as defined in the claim and a limiting viscosity [η] in p-chlorophenol as a solvent at 60° C of 0.2 dl/g or more, and magnetic powder, and a magnetic powder material which comprises 0.5 to 40 % by volume (0.1 to 15 % by weight) of the polymer is coated or adhered to 99.5 to 60 % by volume (99.9 to 85 % by weight) of magnetic powder. Also, disclosed are a resin-bonded magnet which comprises a molded product of the magnetic powder material and methods for preparing these materials with high efficiency.

EP 0 350 800 A2

# MAGNETIC COMPOSITION, MAGNETIC POWDER MATERIAL AND METHOD FOR PREPARING MAGNET

## BACKGROUND OF THE INVENTION

### 1. Field of the Invention

This invention relates to a magnetic composition, a magnetic powder material and a method for preparing a magne , more particularly to (1) a magnetic composition containing a specific resin excellent in heat resistance, chemical resistance, etc., (2) a magnetic powder material of said resin adhered or coated to magnetic powder and (3) a resin-bonded type magnet prepared by molding said magnetic powder material or magnetic composition, as well as (4) methods for preparing these materials with high efficiency.

### 2. Description of the Related Arts

Conventional resin-bonded type permanent magnets have mainly been prepared by the injection molding method or the compression molding method as disclosed in, for example, Japanese Patent Kokai No. 40003/1982, No. 173804/1983, No. 16002/1983, etc., and as a binder resin, a polyamide, ethylene-vinyl acetate copolymer, etc. in the injection molding method and an epoxy resin in the compression molding method have been used.

However, a resin-bonded permanent magnet using a polyamide or an epoxy resin as the binder has poor humidity resistance whereby there are problems of rust generation and diminished characteristics due to a change in dimension with a lapse of time, and its critical temperature for use is as low as 120 to 150 °C.

As the method for obtaining a resin-bonded type magnet by cold compression molding after coating magnetic powder with a thermoplastic resin, various ones have been known. For example, in Japanese Patent Kokai No. 104254/1975, a method is disclosed in which magnetic powder particles coated with Nylon precipitated from about 2% by weight of a solution are subjected to compression molding to obtain a resin-bonded type magnet. Further, in Japanese Patent Kokai No. 186908/1983, there is disclosed a method in which ferrite series magnetic powder is suspended in a radical polymerizable monomer solution to carry out polymerization, and then the magnetic powder particles coated their surfaces with resin are subjected to compression molding in a magnetic field to obtain a resin-bonded type magnet having a magnetic anisotropy. However, these are unsatisfactory in resin characteristics such as heat resistance, chemical resistance, etc., so they could not be used practically.

In recent years, a crystalline resin excellent in heat resistance, chemical resistance and dimensional stability, such as polyphenylenesulfide (PPS), polyether ether ketone (PEEK), etc. has been known. In Japanese Patent Kokai No. 113403/1985, there is disclosed the method in which the above PPS, PEEK and magnetic powder are fused and kneaded, and then a rare earth resin-bonded type magnet is obtained by injection molding.

However, the crystalline resin such as PPS or PEEK requires a high temperature for fusion molding such as 350 °C or higher, so that there is a disadvantage in that magnetic powder of the rare earth is likely to be oxidized at molding.

In addition to the above, various methods have been proposed and for example, in Japanese Patent Kokai No. 134517/1974 and No. 103309/1984, there are proposed the methods in which a mixture or a coated material of thermoplastic resin powder such as a polyamide, a polyolefin, a polycarbonate, etc. and magnetic powder is subjected to hot press molding. However, in this method, when removing a molded material from the mold, it takes a long time for cooling and solidification so that there is a problem of low productivity. Also, in Japanese Patent Kokai No. 186908/1983, there is described a radical polymerizable monomer such as methyl acrylate, etc. is brought into contact with to ferrite series magnetic powder to carry out polymerization, and after coating the powder surface with the polymer, cold press molding is carried out. However, since heat resistance and chemical resistance of the binder resin are insufficient, it has not yet been used practically.

Further, in Japanese Patent Kokai No. 279106/1986, a technique is proposed in which by using PPS as a binder, after PPS is fused under heating and kneaded with magnetic powder, injection molding or extrusion molding is carried out. However, in order to carry out such a fusion under heating and kneading, a treatment at high temperature for a long time should be carried out since fluidity in the kneaded material is

required. This treatment results in a serious problem that the magnetic characteristics are lowered since oxidation of the magnetic powder is promoted.

## SUMMARY OF THE INVENTION

An object of the present invention is to provide a resin-bonded type magnet having excellent heat resistance and chemical resistance as well as excellent magnetic characteristics.

Another object of the present invention is to provide a resin-bonded type magnet which is excellent in dimensional stability with a lapse of time, dimensional stability at molding, etc. in addition to the above mentioned characteristics.

A further object of the present invention is to provide a magnetic powder material and a magnetic composition suitable for molding of the above resin-bonded type magnet.

Also, a further object of the present invention is to provide methods for preparing the above resin-bonded type magnet and magnetic powder material by simple procedures with high productivity and efficiency.

That is, the present invention relates to a resin-bonded type magnetic composition which comprises a polymer having a repeating unit represented by the formula:

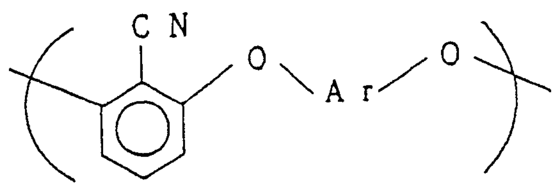 · · · (I)

wherein Ar represents

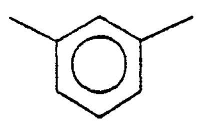 , 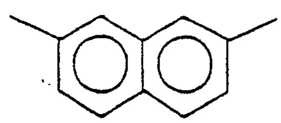 ,

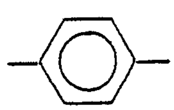 or 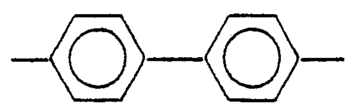

and a limiting viscosity [η] in p-chlorophenol as a solvent at 60°C of 0.2 dl/g or more, and magnetic powder.

Also, the present invention relates to a magnetic powder material which comprises 99.5 to 60% by volume (99.9 to 85% by weight) of magnetic powder and 0.5 to 40% by volume (0.1 to 15% by weight) of the above polymer coated on or adhered to said magnetic powder.

Further, the present invention relates to a resin-bonded type magnet comprising molding the resin-bonded type magnetic composition or the magnetic powder material.

Moreover, the present invention relates to a method for preparing the above magnetic powder material which comprises, to a mixture obtained by dissolving the above polymer in a solvent and dispersing magnetic powder, effecting (1) addition of a bad solvent of said polymer, or (2) volatilization or evaporation of the solvent in said mixture, or (3) cooling said mixture.

Also, the present invention relates to a method for preparing the above magnetic powder material which comprises dissolving by heating the above polymer in a solvent, and then dispersing and mixing the gel obtained by cooling and magnetic powder, and grinding the resultant simultaneously with volatilizing or evaporating the solvent.

Furthermore, the present invention relates to a method for preparing the above resin-bonded type magnet, characterized in that the above magnetic powder material is subjected to molded.

## DESCRIPTION OF PREFERRED EMBODIMENTS

In the present invention, as a polymer to be blended with magnetic powder, or a polymer (a binder) to be coated on or adhered to magnetic powder, the polymer having a repeating unit represented by the above formula (I), i.e. polycyanoaryl ether is used. Here, the polymer having a repeating unit represented by the formula (I) wherein Ar is

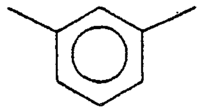

(hereinafter abbreviated to as "PEN-R") is disclosed in Japanese Patent Kokai No. 223226/1987. Also, the polymer having a recurring unit wherein Ar is

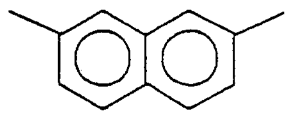

(hereinafter abbreviated to as "PEN-N") is disclosed in Japanese Patent Kokai No. 162523/1986. Further, the polymer having a repeating unit wherein Ar is

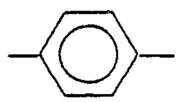

(hereinafter abbreviated to as "PEN-H") is disclosed in Japanese Patent Kokai No. 57619/1986 and the polymer having a repeating unit wherein Ar is

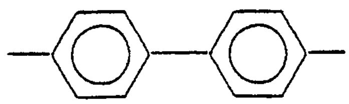

(hereinafter abbreviated to as "PEN-B") is disclosed in Japanese Patent Kokai No. 147439/1985.

The polymer to be used in the present invention has the aforesaid repeating unit as a limiting viscosity in p-chlorophenol as a solvent at 60°C of 0.2 dl/g or more, preferably 0.4 to 2.0 dl/g or more. If the limiting viscosity [$\eta$] is less than 0.2 dl/g, the strength of the resulting molded product is extremely low and it loses heat resistance. On the other hand, if it exceeds 2.0 dl/g, the product sometimes becomes inferior in molding workability.

On the other hand, the type of the magnetic powder is not particularly limited and various ones can be optionally selected depending on the purposes. Specific examples thereof include ferrite powder such as $BaO\cdot 6Fe_2O_3$, $MnO\cdot ZnO\cdot Fe_2O_3$, $\gamma\text{-}Fe_3O_4\cdot PbO\cdot 6Fe_2O_3$, $SrO\cdot 6Fe_2O_3$, etc.; arnico powder such as MCA160, MCA230, MCS500, MCB580, MCB4DOH, etc. of JIS standard; rare earth cobalt powder such as $SmCo_5$, $PrCo_5$, $NdCo_5$, $MMCo_5$ (here, MM represents a Misch metal), $SmPrCo_5$, $SmPrNdCo_5$, $SmMMCo_5$, $R_2Co_{17}$ (wherein R represents a series of rare earth elements of atomic numbers from 58 to 71), $Sm_2Co_{17}$, $Pr_2Co_{17}$, $Sm_2(Co,Fe,Cu)_{17}$ and $Sm_2(Co,Fe,Cu,M)_{17}$ (wherein M represents Ti, Zr or Hf). Further, there can be mentioned rare earth•iron•boron powder ($Nd_2Fe_{14}B$, $Nd_2Fe_{12}Co_2B$, $Pr_2Fe_{14}B$, etc.). In addition, there can be mentioned Fe-Cr-Co magnetic powder, Mn-Al-C magnetic powder, Pt-Co magnetic powder, Pt-Fe magnetic powder, cunife magnetic powder, etc.

In the present invention, the above magnetic powder can be used as it is by mixing with the above polymer, but in order to prevent oxidation of the magnetic powder and improve adhesiveness into a binder (the polymer), it is preferred to treat the surface of the magnetic powder with a coupling agent in an amount of 5% by weight or less, particularly 0.5 to 2.0% by weight or so based on the magnetic powder. Here, coupling agents which can be used include various ones but titanate series and silane series ones are preferable. The titanate series coupling agents include isopropyltriisostearoyl titanate, isopropyltrioctanoyl titanate, isopropyltris(dioctylpyrophosphate)titanate, isopropyldimethacrylisostearoyl titanate, isopropyltri(N-aminoethyl-aminoethyl) titanate, isopropyltridodecylbenzenesulfonyl titanate, isopropylisostearoyldiacryl titanate, isopropyltri(deoctylphosphate)titanate, isopropyltricumylphenyl titanate, tetraisopropylbis-(dioctylphosphite)titanate, tetraoctylbis(ditridecylphosphite)titanate, tetra(2,2-diallyloxymethyl-1-butyl)bis-(ditridecyl)phosphite titanate, bis(dioctylpyrophosphate)oxyacetate titanate, bis(dioctylpyrophosphate)-ethylene titanate, etc. These may be used singly or in combination. Also, the silane series coupling agents include, γ-mercapto-propyl-trimethoxysilane, 2-styrylethyltrimethoxysilane, N-β-( aminoethyl)γ-amino-propyl-trimethoxysilane, β-(3,4-epoxycyclohexyl)ethyl-trimethoxysilane, γ-aminopropyl-trimethoxysilane, γ-glycidoxypropyltrimethoxysilane, phenyltrimethoxysilane, methyldimethoxysilane, etc. and these may be used singly or in combination. Further, the titanium series coupling agents and the silane series coupling agents can be used in combination.

The surface treatment by the coupling agent can be carried out by wetting the magnetic powder with a 5 to 20% by volume of the coupling agent solution (using an alcohol or toluene as a solvent), and then drying it at a temperature not less than room temperature, preferably 120 to 150 °C. According to the surface treatment due to the coupling agent, water repellent property and lubricity are applied to the magnetic powder so that the mechanical strength, etc. of the resin-bonded type magnet obtained after molding can be improved.

The magnetic powder material and the magnetic composition of the present invention are basically composed of the aforesaid polymer and magnetic powder, and their formulating ratio cannot be determined definitely, but generally it is preferred to formulate 0.5 to 40% by volume (0.1 to 15% by weight) of the polymer.

However, when the resin-bonded type magnet is molded by the injection molding method, it is preferred to formulate within the range of 20 to 40% by volume (5 to 15% by weight). If it is less than 20% by volume (5% by weight), it is difficult to obtain fluidity thereof whereby moldability becomes poor, while if it exceeds 40% by volume (15% by weight), the packing ratio of the magnetic powder becomes low, whereby magnetic characteristics become remarkably low.

Also, when the compression molding method is used, it is preferred to formulate 0.5 to 20% by volume (0.1 to 5% by weight) of the polymer, and 0.5 to 10% by volume (0.1 to 4% by weight) is more preferable. In compression molding, if the content of the polymer is less than 0.5% by volume (0.1% by weight), it becomes difficult to act the role of the binder so that shape can not be retained, while if it exceeds 20% by volume (5% by weight), magnetic characteristics become low.

Anyway, in order to improve magnetic characteristics, it is necessary to make the amount of the polymer as small as possible, and increase the amount of the magnetic powder. Decreasing the amount of the powder causes disadvantages in that mechanical strength becomes lower, etc., so that the amount of the polymer should be determined by considering the balance of the magnetic characteristics and the mechanical strength.

The magnetic powder material of the present invention can be obtained by coating or adhering the above polycyanoaryl ether type polymer to the above magnetic powder with a ratio of 0.5 to 40% by volume (0.1 to 15% by weight), preferably 0.5 to 10% by volume (0.1 to 4% by weight). As the method for preparing the magnetic powder material by coating or adhering the polymer to the magnetic powder, there may be mentioned the method in which said polymer and the magnetic powder are mixed in the temperature range between the crystal fusion initiating temperature and the melting point of the polymer, and then the mixture is cooled to coat thereon or adhere thereto; by utilizing the crystallinity of the polymer. However, this method requires high temperatures so that there is danger of causing deterioration of the magnetic powder due to oxidation, and sometimes it is difficult to uniformly disperse the magnetic powder and completely coat or adhere the polymer thereon. Accordingly, as preferred methods for avoiding these problems, there can be mentioned (1) the method in which coating or adhering is effected by precipitating the polymer from the solution system due to phase separation after dissolving the polymer in a solvent, (2) the method in which coating or adhering is effected by precipitating the polymer by volatilizing the solvent, etc.

In the method for preparing the magnetic powder material of the present invention, the aforesaid polycyanoaryl ether type polymer can be coated or adhered to the magnetic powder by the aforesaid methods, and the coated or adhered amount of the polymer at this time should be 0.5 to 40% by volume (0.1 to 15% by weight) (ratio based on the total magnetic powder material) as already described. If the coated or adhered amount is less than 0.5% by volume, it becomes difficult for the polymer to act the role of the binder so that shape can not be retained at molding, while if it exceeds 40% by volume, magnetic characteristics become low.

An amount of the coated polymer can be calculated by dissolving the polymer of the magnetic powder material to remove with N-methylpyrrolidone, etc., having strong dissolving power and measuring the weight

decreased.

Next, as the solvent for dissolving the above polymer, it is preferred to use a polar solvent having high dissolving power, which can dissolve said polymer, and may include, for example, N-methylpyrrolidone, α-chloronaphthalene, dichloroacetic acid, 1,3-dimethyl-2-imidazolidinone, dimethylsulfoxide, dimethylacetamide, dimethylformamide, p-chlorophenol, etc.

The kind of the solvent to be used should be optionally selected depending on the kinds or molecular weights of the polymer, and generally, N-methylpyrrolidone is preferred.

Also, an amount of the solvent may be varied depending on the amount of the polymer supplied, or kinds, grain size distribution, wettability, adhesivensess to the polymer of the magnetic powder, etc. For example, when an anisotropic one such as ferriete magnetic powder or samarium cobalt magnetic powder is coated with a polymer, in order to decrease aggregation of the magnetic powder with each other, it is preferred to make the condition wherein a mixed slurry of the magnetic powder and the polymer solution are diluted to about 5 to 50% by weight. Accordingly, a ratio of the amount of the polymer to the solvent, i.e. a polymer concentration (amount of charged resin (g)/amount of solvent (dl)) is preferably 0.1 to 5 g/dl.

Also, in order to dissolve the polymer in a solvent, it is carried out by supplying the above solvent and the polymer in a powder state into a suitable stirring tank and then heating while stirring. The heating temperature at this time should be raised, for example, to 190 °C or higher when N-methylpyrrolidone is used as the solvent. Heating and stirring are preferably continued to uniformly dissolve the polymer.

Coating the polymer on the magnetic powder by using the thus prepared polymer solution is carried out by the four kinds of methods mentioned hereinbelow. The method employed for the polymer coating can be optionally selected depending on the kinds of the polymer solution or magnetic powder to be used or conditions thereof.

(1) Method of using a bad solvent

By adding a bad solvent of the polymer to a hot solution of said polymer (a mixture wherein magnetic powder is dispersed in a solution dissolving the polymer therein), the solubility thereof can be made lower so that the polymer can be precipitated on the magnetic powder. The bad solvent means a solvent in which the polymer is insoluble or little soluble.

The dropwise addition of the bad solvent is preferably started at a temperature wherein the hot solution of the polymer is uniformly dissolved. That is, the temperature whereat almost all the polymer in the solution does not start to precipitate upon cooling, and is preferably the temperature not more than the boiling point of the bad solvent.

As the bad solvent, an organic solvent other than N-methylpyrrolidone (190 to 200 °C) and p-chlorophenol (50 °C or higher), and water can be employed; so that it may be optionally selected depending on the molecular weight of the polymer to be used, concentration of the polymer and solubililty of the polymer depending on the dissolution temperature. Specific examples of the bad solvents include water, methanol, isopropyl alcohol, acetone, toluene, etc. Also, solvent with high boiling point such as α-chloro naphthalene, 1,3-dimethyl-2-imidazolidinone, dimethylsulfoxide, dimethylacetamide, dimethylformamide, N-methylpyrrolidone, etc. may be used as the bad solvent depending on the temperature.

The added amount of the bad solvent depends on the concentration of the polymer solution, but generally an amount equivalent to the amount of the basic solvent or more is preferred. As to the method of addition, it is preferred to supply with a liquid drops as minute as possible (for example, a liquid in the atomizing state) under vigorous dispersion and stirring.

(2) Method due to volatilization and evaporation

The method in which the solvent is volatilized and evaporated to precipitate the polymer on the magnetic powder may be carried out, for example, by supplying with a liquid transferring pump, a mixed slurry (mixture) of the magnetic powder, the polymer solution and a low boiling point solvent having high solubility to the polymer to a heating tube overheated and explosively blowing out in a room with high temperature and vacuum, to evaporate (volatilize) the solvent in a moment.

However, in this case, when selection of a mixed solvent with a low boiling point solvent having high solubility to the polymer is difficult, evaporation (volatilization) of the solvent in a moment can be carried out with a good solvent alone if temperatures of the heating tube and the room with high temperature and vacuum are not less than the boiling point of the solvent.

As an apparatus for carrying out such procedures, there may be applied the Cracks System (an instantaneous vacuum drying apparatus) produced by Orient Chemical Industry Co., Ltd.)

(3) The method by cooling

By cooling a hot solution of the polymer (a mixed solution of magnetic powder dispersed in a solution of the dissolved polymer) and decreasing the solubility of the polymer, the polymer can be precipitated on the magnetic powder. Further, a low molecular weight component, which is a part of the solution and cannot be precipitated, can be precipitated by adding a bad solvent.

More specifically, it can be carried out by mixing the hot solution of the polymer uniformly dissolved in a stirring tank having a jacket with magnetic powder, and cooling the mixture to room temperature while effecting dispersion and stirring with a wet dispersing and stirring apparatus and flowing a cold water in the jacket.

Further, by adding a bad solvent with an amount equivalent to or more than the volume of the polymer solution, almost all of the polymer can be precipitated. As the above wet dispersing and stirring apparatus, there may be applied, for example, an ultrahomomixer produced by Nippon Seiki Seisakusho K.K. or an ultradisperser produced by IKA K.K.

The cooling rate and precipitating time may optionally be selected since the time of forming precipitates is different depending on the solubility of the polymer or dissolution conditions, but generally it is preferred to provide a precipitating time of one hour or more after cooling to room temperature for 1 to 2 hours. If no precipitation time is provided, it may cause delay in precipitation of the polymer due to its supercooled state.

Also, the bad solvent may be used, for example, water, methanol, isopropyl alcohol, acetone, toluene, etc.

Also, particularly, the case where cooling is effected by using a conc entrated solution of the polymer is as follows:

When a hot concentrated solution is cooled, it does not stop at a jelly-like state but rather as solid material such as wax or soap. By using this physical property, it can be effected to coat the polymer on the magnetic powder simultaneously with grinding thereof. That is, by adding dropwise a hot solution of the polymer to magnetic powder preheated to a temperature which is the same as the hot solution of the polymer, under high speed dispersion and stirring, and cooling, the polymer can be coated on the magnetic powder and grinding can be carried out simultaneously by precipitating and solidifying the polymer.

As the stirring disperser, a dry type disperser such as Henshel mixer, high speed mixer and super mixer, etc. can be used. At the time of disperse by these mixers, grinding ability can be increased by adding a ball made of ceramics such as an alumina, etc.

Also, the concentration of the polymer solution is preferably 2 (g/dl) or more. If it is less tha 2 (g/dl), it becomes a jelly-like state and aggregation is inevitable so that it is impossible to carry out coating and grinding simultaneously. In this method, when the amount of the solvent is decreased as little as possible, productivity can be increased but as the amount of the solvent is decreased, the polymer does not dissolve completely in the solvent whereby a uniform solution cannot be obtained. That is, the solution concentration may optionally be selected at which coating and grinding can be carried out simultaneously and easily in the concentration range wherein the polymer is dissolved in the solvent uniformly, and generally it is preferred to 5 to 25 (g/dl). Also, the solvent can be removed by drying under reduced pressure at a temperature of 100 °C or higher while carrying out dispersion and grinding simultaneously in a mixer.

The polymer-coated magnetic powder obtained by this method is subjected to compression molding without removing the solvent to carry out desolvation (solvent removal) simultaneously with compression molding. Also, when desolvation is effected before molding, after adding a bad solvent so as to become a slurry containing 30 to 50% by weight of the magnetic powder, the solvent can be removed with the bad solvent by using an instantaneous vacuum drying device.

(4) Method by volatilization or evaporation of the solvent in a gel

A gel (solid component) previously prepared from a polymer solution and magnetic powder are dispersed and mixed, and then removal of the solvent was carried out while effecting dispersion and grinding, whereby adhering to or coating on the magnetic powder can be carried out.

That is, the gel obtained by cooling the resin solution from its dissolution temperature to room

temperature was dispersed and mixed with the magnetic powder, and then, subjected to dispersion and grinding thereof, and thereafter drying under reduced pressure at a temperature of 100 °C or higher is performed to adhere or coat the gel to the magnetic powder can.

As the mixer, a Henshel mixer in method (3) can be used. Also, in order to improve grinding ability, balls may be used in combination. The size, hardness or numbers of balls may be optionally determined depending on grinding ability.

The concentration of the polymer solution is preferably 5 to 25 g/dl. If it is less than 5 g/dl, an amount of the solvent to be used increases so that productivity decreases, while if it exceeds 25 g/dl, dispersion of a gel is likely to becomes ununiform.

Regarding the magnetic powder coated or adhered with the polymer obtained by the above methods (1) to (4), grinding treatment is carried out, if necessary. For this grinding treatment, it is preferred to use an impact type mill and more specifically, a hammer mill (for example, a sample mill produced by Fuji Powdal K.K., or an atomizer) may be applied. This is to supply a polymer-coated magnetic powder from a hopper via a feeder to a hammer-shaped rotary wing rotating with high speed (6000 to 12000 rpm) to collide with the hammer, whereby the grinding treatment is carried out.

This grinding is generally carried out at a normal temperature and normal pressure, but it may be carried out at a low temperature by using a coolant such as dry ice, etc. or a liquid nitrogen atmosphere. Also, in case of using a rare earth magnetic powder, in order to avoid oxidation due to collision, it is preferred to effect the procedure at a low temperature under an inert gas atmosphere such as liquid nitrogen, etc. The shearing force to be applied may be optionally selected depending on the numbers of rotation and numbers of grinding treatments.

For preparing the resin-bonded type magnet of the present invention, the aforesaid magnet composition or the magnet material may be molded. For methods of molding, the injection molding method, the compression molding method, the extrusion molding method, the roll pressure method, etc., may be used. For example, when the injection molding method is used, the polymer having the repeating unit of the above formula (I) is preferable one having a limiting viscosity [$\eta$] of 0.4 to 2.0 dl/g. If the limiting viscosity [$\eta$] is less than 0.4 dl/g, magnetic characteristics are remarkably reduced since the magnetic powder is compressed at injection molding, while if it exceeds 2.0 dl/g, the molding property is inferior since the fluidity thereof is high. Also, when the compression molding is used, the limiting viscosity [$\eta$] is preferably 0.4 dl/g or more. If it is less than 0.4 dl/g, the problem exists in that film forming property is inferior when coating the surface of the magnetic powder.

Specific methods for molding are as follows:

Firstly, when the magnet is prepared by the injection molding method, magnetic powder which is surface treated with a coupling agent, if necessary, as mentioned above, is kneaded with the polymer having the repeating unit of the above formula (I) to obtain a mixture. Kneading at this time should be performed to disperse the magnetic powder well at a temperature in the range between the melting point of the polymer and a temperature lower than the decomposition temperature thereof so as to avoid decomposition of the polymer, i.e. 360 to 540 °C in PEN-B, 360 to 530 °C in PEN-H, 340 to 520 °C in PEN-R and 370 to 510 °C in PEN-B, respectively.

The mixture obtained by kneading is further subjected to injection molding with a mold, and the temperature at this time is preferably the same as the temperature range at kneading and the pressure is preferably within the range of 1000 to 2000 $kg/cm^2$. The reason for determining the temperature range is the same as for kneading, and the reason for setting the pressure in the above mentioned range is to maintain good molding workability. More specifically, if the pressure is less than 1000 $kg/cm^2$, flow of the mixture becomes poor and it is difficult to obtain molded products excellent in dimensional accuracy, while if it exceeds 2000 $kg/cm^2$, crack, etc. are likely to result in the molded product.

If the injection molding is performed while applying a magnetic field of 10 kOe or more, an anisotropic resin magnet in which the magnetic powder is oriented to a predetermined direction can be produced. Also, by carrying out the procedure without applying a magnetic field, an isotropic resin magnet capable of magnetizing to all directions can be produced.

The thus prepared magnet (resin magnet) can be maintained in its magnetic characteristics and mechanical strength to the same degree as the conventional products and it is extremely improved in heat resistance, as compared with the conventional products.

When the magnet is prepared by the compression molding method, for combination of the polymer which becomes a binder with the magnetic powder, the method in which fine particles of the polymer and the magnetic powder are mixed, or the method in which the polymer is coated or adhered to the surface of the magnetic powder, etc. can be used. In this case, the amount of the polymer is preferably 2 to 5% by volume (0.5 to 4% by weight) in order to improve magnetic characteristics and to retain mechanical

strength at an extent. For this, the method of coating with the polymer is preferred, and the specific contents are as mentioned above.

The compression molding is carried out after the above magnetic powder material is, if necessary, ground. Also, of compression molding methods, the cold compression molding is preferred. To conduct the cold compression molding, the molding pressure may be a pressure at which the above polymer as a binder resin causes plastic deformation or greater, and generally it may optionally be selected in the range of 1 $t/cm^2$ or greater. Also, for the temperature, room temperature is generally sufficient. According to cold compression molding, the binder resin is compressed by plastic deformation, whereby strength of the resulting molded product is increased and a resin (polymer)-bonded type magnet having excellent physical properties can be obtained.

Also, in conducting this cold compression, an anisotropic polymer-bonded type magnet can be obtained by carrying out the procedure while applying a magnetic field. In this case, it is effective to apply a magnetic field of 15 kOe or more. Also, if the cold compression molding is conducted without applying a magnetic field, an isotropic resin-bonded type magnet which is capable of magnetizing to all directions can be obtained.

After compression molding, if necessary, heat treatment may be carried out. This heat treatment may be carried out by allowing the magnet to stand at a temperature not less than the softening (pour) point or the melting point of the polymer for several minutes. According to this heat treatment, the polymer is fused and crystallized whereby recombination is progressed and the strength of the polymer-bonded type magnet can further be improved.

Further, magnetization after molding is carried out by the conventional method such as applying a magnetic field of 20 kOe or more.

In the method for preparing the polymer-bonded type magnet according to the present invention, a magnetic powder material to which a polymer is coated or adhered the other methods may be used, and the magnetic powder material obtained by the method for preparing the magnetic powder material of the present invention may be molded to a magnet obtained by the other methods, but by combining both methods of the present invention, production stability and mass productivity can be improved, whereby magnets having excellent characteristics can easily be obtained.

As explained above, the magnetic composition and the magnetic powder material of the present invention are good in preservability as compared with the case where a thermosetting polymer is used as a binder, since its chemical stability over a lapse of time is excellent.

Also, the resin-bonded type magnet of the present invention is a very practical endurable magnet which is excellent in heat resistance as well as excellent in chemical resistance, water absorption resistance, dimensional stability over a lapse of time, dimensional stability at molding, liner expansion coefficient, etc.

And yet, according to the method of the present invention, a magnet can be molded by the injection molding or the compression molding, and further by the cold compression molding without heating, so that the production steps are simple and inexpensive in costs such as equipment and working, and also excellent in production stability and mass productivity.

Accordingly, the resin-bonded type magnet in the present invention can be widely and effectively utilized for various electric and electronic devices including motors, etc. used in places with high temperature circumstances or requiring chemical resistance.

Also, according to the method for preparing the magnetic powder material of the present invention, a magnetic powder material suitable with the above method for preparing the resin-bonded type magnet can be effectively prepared.

Next, the present invention will be described in more detailed by referring to Examples.

(1) Magnetic powder

Ferrite powder

Strontium ferrite; $SrO \cdot 6Fe_2O_3$

OP-71 produced by Nippon Bengara Industry K.K. (a product surface treated with a silane coupling agent)

Rare earth cobalt powder

Samarium cobalt 2-17 series; $Sm_2Co_{17}$
R-30 produced by Shinetsu Chemical Industries, Ltd. (32 mesh under):

Into a bortex pulverizer, 3 kg of magnetic powder and 5 liters of isopropanol were introduced, and after replacing the atmosphere with $N_2$ gas therein sufficiently, pulverization was carried out for 7 minutes and classified to obtain a powder having an average particle size of 37μ m. The resulting magnetic powder (3 kg) was introduced into a supermixer and the temperature was raised to 100° C under a $N_2$ gas atmosphere, and 300 g of an isopropanol solution containing 10% of a silane coupling agent (A-1120 produced by Nippon Unicar K.K. (N-β-aminoethyl-γ-amino-propyl-trimethoxysilane)) was added dropwise over 5 minutes. Thereafter, stirring was continued for 10 minutes, subsequently desolvation (solvent removal) was carried out by blowing nitrogen gas. Then, the mixture was maintained in an oven at 100° C for one hour.

Neodium series magnetic powder

(Rare earth-iron-boron powder): $Nd_2Fe_{14}B$
MQ-II powder produced by General Motors Co., Ltd.

Into a ball mill was introduced 3 kg of magnetic powder, and while stirring, 500 g of a toluene solution containing 3% by weight of titanate coupling agent (KRTTS: isopropyltriisostearoyltitanate produced by Ajinomoto K.K.) was added dropwise and the mixture was treated for 6 hours. Under a 80° C bath, the mixture was dried by using an aspirator, and further vacuum dried at 60° C and classified to obtain powder having an average particle size of 37μ m.

(2) Polymer (binder)

① For injection molding

| Kinds | Limiting viscosity (dl/g) | Drying conditions |
|---|---|---|
| PEN-R | 0.7 | 130° C, 6 hours or more |
| PEN-N | 0.5 | |
| PEN-H | 1.0 | |
| PEN-B | 0.9 | |

For comparative example:

PPS (Polyphenylene sulfide) commercially available product

②For Compression moldings

| Kinds | Limiting viscosity (dl/g) |
|---|---|
| PEN-R | 1.2 |
| PEN-N | 0.8 |
| PEN-H | 1.5 |
| PEN-B | 1.8 |

For comparative example:

Epoxy resin: Mixture of Epirets SU-8 (produced by Celaneese Co., Ltd.) (R) and 1-(2-hydroxy-propyl)-2-methylimidazole (C) (C/R ratio = 0.04).

(3) Stirring disperser

Ultradisperser produced by IKA Co., Ltd. (rotary number: 10000 rotations per minute).

(4) Instantaneous vacuum drying device

Cracks system produced by Orient Chemical Industry Co., Ltd.

(5) Disperser (High speed mixer)

LFG-GS-1 Type (agitator rotary number: 2000 rotations per minute) produced by Shinko Industry Co., Ltd. Measurement of polymer-coated amount in Examples

Into a flask was charged 10 g (the value precisely measured is $W_1$) of the magnetic powder after polymer coating, and dissolution and extraction under heating were carried out at 60°C by using 150 ml of p-chlorophenol solvent. After repeating the above procedure by causing no nebula when water was added to the extracted filtrate, the solvent remaining in the magnetic powder was removed by methanol and then the powder was vacuum dried at 50°C. A weight ($W_2$) of the resulting magnetic powder removed the coated polymer was measured and a decreased weight was made as the amount of the coated polymer. The amount of the coated polymer (% by weight) was calculated from the following equation.

$$\text{Coated polymer amount (\% by weight)} = \frac{W_1 - W_2}{W_1} \times 100$$

<u>Example 1</u>

In this example, a magnet was prepared by the injection molding method using the starting material and conditions as shown in Table 1.

After mixing magnetic powder and binder powder, the mixture was kneaded by using a continuous extrusion kneading machine (produced by K.K. KCK), formulated into pellets and injection molded.

By using a magnetic field injection molding machine TL50-MGS produced by Tanabe Industry K.K., molding was carried out in magnetic field of 10 kOe to obtain test pieces of a cylinder having a diameter of 20 mm and a thickness of 10 mm and a square pillar shape of 127 mm x 12 mm x 6 mm.

Regarding these test pieces, the following tests were carried out and the results were shown in Table 1.
Thermal deformation temperature: according to ASTM-D648. Load 18.6 kg/cm$^2$.
Bending strength: according to ASTM-D790.

Water absorbing ratio: according to ASTM-D570.
Chemical resistance: according to JIS-K7114.

Comparative example 1

A magnet was prepared by the injection molding method in the same manner as in Example 1 with the starting materials and conditions as shown in Table 1. Resulting test pieces were examined in the same manner as in Example 1. The results are shown in Table 1.

Table 1

| No. | Magnetic powder | Polymer | | Kneading temperature (°C) | Injection molding conditions | |
|---|---|---|---|---|---|---|
| | | Kinds | Volume (Weight) (%) | | Temperature (°C) | Pressure (kg/cm²) |
| Experimental 1 | $SrO \cdot 6Fe_2O_3$ | PEN-H | 30 (10.5) | 365 | 375 | 1800 |
| Experimental 2 | Ditto | Ditto | 35 (12.7) | 365 | 375 | 1700 |
| Experimental 3 | Ditto | Ditto | 40 (14.9) | 360 | 370 | 1600 |
| Experimental 4 | Ditto | Ditto | 45 (17.1) | 360 | 365 | 1600 |
| Experimental 5 | Ditto | PEN-R | 30 (10.5) | 355 | 365 | 1700 |
| Experimental 6 | Ditto | Ditto | 35 (12.7) | 355 | 365 | 1600 |
| Experimental 7 | Ditto | Ditto | 40 (14.9) | 350 | 360 | 1500 |
| Experimental 8 | Ditto | Ditto | 45 (17.1) | 350 | 360 | 1500 |
| Experimental 9 | Ditto | PEN-N | 35 (12.7) | 370 | 385 | 1900 |
| Experimental 10 | Ditto | PEN-B | 35 (12.7) | 370 | 380 | 1900 |
| Experimental 11 | $Sm_2Co_{17}$ | PEN-R | 25 (5.3) | 355 | 365 | 1900 |
| Experimental 12 | Ditto | Ditto | 30 (7.5) | 350 | 365 | 1800 |
| Experimental 13 | Ditto | PEN-H | 25 (5.3) | 365 | 375 | 1800 |
| Experimental 14 | Ditto | Ditto | 30 (7.5) | 360 | 370 | 1700 |
| Experimental 15 | $Nd_2Fe_{14}B$ | PEN-R | 25 (5.9) | 355 | 365 | 1800 |
| Experimental 16 | Ditto | Ditto | 30 (6.7) | 355 | 365 | 1800 |

Table 1 (continued)

| No. | Characteristics of molded materials: Thermal deformation temperature (°C) | Beiding strength ($kg/cm^2$) | Water absorbing ratio (%) | Chemical resistance | Magnetic characteristics: Residual magnetic flux density Br (KG) | Coercive force bHc (KOe) | Maximum energy product $(BH)_{max}$ (MGOe) |
|---|---|---|---|---|---|---|---|
| Experimental 1 | 315 | 1200 | 0.010 | Good* | 2.75 | 2.25 | 1.83 |
| Experimental 2 | 310 | 1140 | 0.012 | Good* | 2.50 | 2.23 | 1.61 |
| Experimental 3 | 307 | 1100 | 0.014 | Good* | 2.35 | 2.20 | 1.35 |
| Experimental 4 | 302 | 1060 | 0.013 | Good* | 2.14 | 2.00 | 1.18 |
| Experimental 5 | 318 | 1300 | $9\times10^{-3}$ | Good* | 2.70 | 2.37 | 1.75 |
| Experimental 6 | 312 | 1270 | 0.010 | Good* | 2.43 | 2.22 | 1.52 |
| Experimental 7 | 307 | 1200 | 0.012 | Good* | 2.20 | 2.03 | 1.26 |
| Experimental 8 | 304 | 1140 | 0.013 | Good* | 2.10 | 1.98 | 1.06 |
| Experimental 9 | 318 | 950 | 0.015 | Good* | 2.38 | 2.21 | 1.44 |
| Experimental 10 | 325 | 1000 | 0.012 | Good* | 2.50 | 2.23 | 1.62 |
| Experimental 11 | 315 | 1350 | $7\times10^{-3}$ | Good* | 6.9 | 5.0 | 9.5 |
| Experimental 12 | 310 | 1300 | $9\times10^{-3}$ | Good* | 6.5 | 4.7 | 9.2 |
| Experimental 13 | 322 | 1280 | $8\times10^{-3}$ | Good* | 6.7 | 4.9 | 9.4 |
| Experimental 14 | 314 | 1210 | 0.010 | Good* | 6.4 | 4.5 | 9.0 |
| Experimental 15 | 325 | 1100 | $7\times10^{-3}$ | Good* | 5.2 | 4.7 | 6.0 |
| Experimental 16 | 320 | 1030 | $9\times10^{-3}$ | Good* | 5.2 | 4.0 | 5.3 |

* Not corroded by organic solvents, acids and alkaline solution other than p-chlorophenol and concentrated sulfuric acid.

Table 2

| No. | Magnetic powder | Polymer | | Kneading temperature (°C) | Injection molding conditions | |
|---|---|---|---|---|---|---|
| | | Kinds | Volume (Weight) (%) | | Temperature (°C) | Pressure ($kg/cm^2$) |
| Experimental 1 | $SrO \cdot 6Fe_2O_3$ | PPS | 35 (12.7) | 350 | 350 | 1400 |
| Experimental 2 | $Sm_2Co_{17}$ | Ditto | 30 (7.5) | 360 | 360 | 1500 |
| Experimental 3 | $Nd_2Fe_{14}B$ | Ditto | 30 (6.7) | 360 | 355 | 1600 |

Table 2 (continued)

| No. | Characteristics of molded materials | | | | Magnetic characteristics | | |
|---|---|---|---|---|---|---|---|
| | Thermal deformation temperature (°C) | Beiding strength ($kg/cm^2$) | Water absorbing ratio (%) | Chemical resistance | Residual magnetic flux density Br (KG) | Coercive force bHc (KOe) | Maximum energy product $(BH)_{max}$ (MGOe) |
| Experimental 1 | 245 | 850 | 0.010 | Good* | 2.50 | 2.23 | 1.60 |
| Experimental 2 | 272 | 900 | $9x10^{-3}$ | Good* | 7.0 | 5.1 | 9.7 |
| Experimental 3 | 286 | 800 | $9x10^{-3}$ | Good* | 5.2 | 4.3 | 5.6 |

* Not corroded by organic solvents, acids and alkaline solution other than p-chlorophenol and concentrated sulfuric acid.

Example 2

In this example, a magnet was prepared by compression molding using the starting materials and conditions as shown in Table 3.

Magnetic powder, a binder (polymer) and N-methylpyrrolidone as a solvent were mixed, and under an argon atmosphere, and the mixture was dissolved by heating to 190 °C. Then, the mixture was gradually cooled to 50 °C over 4 hours while stirring, whereby precipitating the binder resin onto the surface of the magnetic powder to coat thereon. After washing the residual solvent, it was dried. However, when strontium ferrite powder was used, after coating with a resin, the powder was ground with a grinding machine.

Then, by using a magnetic field compression molding device (produced by High Tech Co., Ltd.), molding was effected at room temperature in a magnetic field of 15 kOe to obtain a square pillar sample having an approximate dimension of 8 x 14 x 7 mm and a cylinder sample having a diameter of 20 mm and 10 g/each.

The resulting samples were subjected to heat treatment in an oven with an argon atmosphere for about 3 minutes, and then magnetization was carried out in a magnetic field of 20 kOe to obtain permanent magnets.

With respect to the resulting magnets, the same experiments as in Example 1 were carried out. The results are shown in Table 3. Measurement of compression strength (JIS-K 7208) was carried out in place of bending strength.

Comparative example 2

An epoxy resin, magnetic powder and acetone were mixed at room temperature, and after impregnation, desolvation (solvent removal) was carried out under reduced pressure. The obtained magnetic powder was subjected to compression molding in a magnet field as in Example 2, and then curing treatment was carried out at 100 °C for 2 hours under an argon atmosphere. This was magnetized in the same manner as in Example 2 to obtain permanent magnets.

Regarding the resulting magnets, the same experiments as in Example 2 were carried out. The results are shown in Table 3.

Table 3

| No. | No. | Magnetic powder | Polymer: Kinds | Polymer: Volume (Weight) | Coating conditions: Amount of resin (g) | Coating conditions: Amount of magnetic powder (g) | Coating conditions: Amount of solvent (ml) | Coating conditions: Heating (°C) | Molding conditions: Molding pressure (t/cm²) | Molding conditions: Heat treatment temperature (°C) |
|---|---|---|---|---|---|---|---|---|---|---|
| Example 2 | Experimental 1 | $SrO \cdot 6Fe_2O_3$ | PEN-H | 7 (2.10) | 1.9 | 98.1 | 190 | 190 | 4 | 360 |
| " | Experimental 2 | Ditto | PEN-R | 7 (2.10) | 1.9 | 98.1 | 190 | 190 | 4 | 350 |
| " | Experimental 3 | Ditto | PEN-B | 7 (2.10) | 1.8 | 98.2 | 180 | 190 | 4 | 360 |
| " | Experimenatl 4 | Ditto | PEN-N | 7 (2.10) | 1.8 | 98.2 | 180 | 190 | 4 | 370 |
| " | Experimental 5 | Ditto | PEN-R | 5 (1.34) | 1.4 | 98.6 | 145 | 190 | 4 | 350 |
| " | Experimental 6 | Ditto | PEN-R | 10 (2.98) | 3.0 | 97.0 | 300 | 190 | 4 | 350 |
| " | Experimental 7 | Ditto | PEN-R | 7 (2.10) | 1.9 | 98.1 | 190 | 190 | 5 | 350 |
| " | Experimental 8 | Ditto | PEN-R | 7 (2.10) | 1.9 | 98.1 | 190 | 190 | 6 | 350 |
| " | Experimental 9 | $Sm_2Co_{17}$ | PEN-R | 5 (0.93) | 0.85 | 99.15 | 85 | 190 | 4 | 350 |
| " | Experimental 10 | Ditto | PEN-H | 7 (1.18) | 1.27 | 98.73 | 120 | 190 | 4 | 360 |
| " | Experimental 11 | $Nd_2Fe_{14}B$ | PEN-R | 7 (1.34) | 1.27 | 98.73 | 130 | 190 | 4 | 350 |
| " | Experimental 12 | Ditto | PEN-H | 7 (1.34) | 1.27 | 98.73 | 130 | 190 | 4 | 360 |
| " | Experimental 13 | Ditto | PEN-B | 7 (1.34) | 1.8 | 98.2 | 180 | 190 | 4 | 360 |
| Comparative example 2 | Experimental 14 | $Sm_2Co_{17}$ | Epoxy resin | – | 2.0 | 98.0 | 50 | Room temperature | 4 | 150 |
| " | Experimental 15 | $Nd_2Fe_{14}B$ | Ditto | – | 2.0 | 98.0 | 50 | Room temperature | 4 | Ditto |

Table 3 (continued)

| No. | No. | Characteristics of molded material: Thermal deformation temperature (°C) | Characteristics of molded material: Compression strength (kg/cm²) | Characteristics of molded material: Water absorbing ratio ($10^{-3}$ %) | Magnetic characteristics: Residual magnetic flux density Br (KG) | Magnetic characteristics: Coercive force bHc (KOe) | Magnetic characteristics: Maximum energy product $(BH)_{max}$ (MGOe) | Amount of resin coated (% by weight) |
|---|---|---|---|---|---|---|---|---|
| Example 2 | Experimental 1 | 340 | 1200 | 4.9 | 2.54 | 2.34 | 1.60 | 1.5 |
| " | Experimental 2 | 335 | 1390 | 4.8 | 2.57 | 2.35 | 1.62 | 1.5 |
| " | Experimental 3 | 353 | 1200 | 5.0 | 2.55 | 2.36 | 1.60 | 1.4 |
| " | Experimental 4 | 360 | 980 | 4.2 | 2.52 | 2.30 | 1.59 | 1.4 |
| " | Experimental 5 | 337 | 1250 | 3.5 | 2.67 | 2.30 | 1.71 | 1.1 |
| " | Experimental 6 | 333 | 1620 | 7.0 | 2.36 | 2.11 | 1.39 | 2.2 |
| " | Experimental 7 | 337 | 1460 | 4.9 | 2.62 | 2.30 | 1.68 | 1.5 |
| " | Experimental 8 | 339 | 1520 | 5.0 | 2.69 | 2.32 | 1.73 | 1.5 |
| " | Experimental 9 | 337 | 1200 | 3.4 | 8.0 | 6.2 | 14.3 | 0.7 |
| " | Experimental 10 | 339 | 1320 | 4.7 | 7.6 | 6.43 | 13.0 | 1.0 |
| " | Experimental 11 | 334 | 960 | 4.8 | 5.4 | 4.8 | 7.3 | 1.0 |
| " | Experimental 12 | 342 | 890 | 4.8 | 5.6 | 4.9 | 7.8 | 1.0 |
| " | Experimental 13 | 352 | 950 | 4.9 | 6.1 | 5.3 | 8.0 | 1.3 |
| Comparative example 2 | Experimental 14 | 200 | 460 | 8.2 | 6.6 | 8.0 | 14.7 | — |
| " | Experimental 15 | 205 | 380 | 8.0 | 6.1 | 5.3 | 8.0 | — |

a. Coating step

Example 3

Into a glass apparatus supplied therein 975 g of ferrite powder preheated to 200° C and equipped with a 5 liter jacket was poured at 190° C 2 liters of N-methylpyrrolidone polymer solution dissolved therein 25 g of a polymer (PEN-R, limiting viscosity 0.70 (dl/g), produced by Idemitsu Kosan Co., Ltd.), and then the mixture was cooled to room temperature by flowing cold water in the jacket while vigorously stirring and dispersing with a stirring disperser.

Thereafter, stirring and dispersing were carried out while adding dropwise 600 ml of isopropyl alcohol from a dropping funnel over 30 minutes. The resulting slurry was subjected to solvent replacement due to decantation using one liter of isopropyl alcohol and repeated three times, and then the solvent was removed by an instantaneous vacuum drying device. Working conditions of the instantaneous vacuum drying device were a heating pipe jacket temperature of 130° C, a temperature in the powder collecting room of 120° C, vacuum degree of 30 torr, a liquid transferring pump of 250 cc/min and a discharging pressure of 0.1 to 2.7 $kg/cm^2$.

Example 4

In Example 3, the polymer was changed from PEN-R to PEN-H (limiting viscosity 0.4 (dl/g), produced by Idemitsu Kosan Co., Ltd.), and polymer coating was carried out in the same manner as in Example 3.

Example 5

In Example 3, the polymer was changed from PEN-R to PEN-N (limiting viscosity 0.3 (dl/g), produced by Idemitsu Kosan Co., Ltd.), and polymer coating was carried out in the same manner as in Example 3.

Example 6

In Example 3, the polymer was changed from PEN-R to PEN-B (limiting viscosity 0.5 (dl/g), produced by Idemitsu Kosan Co., Ltd.), and polymer coating was carried out in the same manner as in Example 3.

Example 7

In Example 3, the magnetic powder was replaced with neodium series magnetic powder, and polymer coating was carried out in the same manner as in Example 3 under an inert atmosphere of argon stream.

Example 8

In Example 3, the magnetic powder was replaced with samarium cobalt series magnetic powder, and polymer coating was carried out in the same manner as in Example 3 under an inert atmosphere of argon stream.

Example 9

Into 2 liters of N-methyl-2-pyrrolidone was dissolved 18 g of PEN-N (limiting viscosity 0.3 (dl/g), produced by Idemitsu Kosan Co., Ltd.) at 195° C, and 982 g of ferrite magnetic powder and 4 liters of tolune were mixed, and while strongly stirring and dispersing with a stirring disperser, the mixture was

supplied to an instantaneous vacuum drying apparatus through a transfer pump to effect direct solvent removal. Working conditions of the instantaneous vacuum drying apparatus were a heating pipe jacket temperature of 160 °C, a temperature in a powder collecting room of 160 °C, vacuum degree of 30 torr, a liquid transferring pump of 250 cc/min and a discharging pressure of 0.1 to 2.5 $kg/cm^2$.

Example 10

In Example 9, the polymer was changed from PEN-R to PEN-H (limiting viscosity 0.4 (dl/g), and produced by Idemitsu Kosan Co., Ltd.), polymer coating was carried out in the same manner as in Example 9.

Example 11

In Example 9, the polymer was changed from PEN-R to PEN-N (limiting viscosity 0.3 (dl/g), produced by Idemitsu Kosan Co., Ltd.), and polymer coating was carried out in the same manner as in Example 9.

Example 12

In Example 9, the polymer was changed from PEN-R to PEN-B (limiting viscosity 0.5 (dl/g), produced by Idemitsu Kosan Co., Ltd.), and polymer coating was carried out in the same manner as in Example 9.

Example 13

In Example 9, the magnetic powder was replaced with neodium series magnetic powder and the discharging pressure was changed to 0.1 to 1.8 $kg/cm^2$, and polymer coating was carried out in the same manner as in Example 9.

Example 14

In Example 9, the magnetic powder was replaced with samarium cobalt series magnetic powder and the discharging pressure was changed to 0.1 to 1.8 $kg/cm^2$, and polymer coating was carried out in the same manner as in Example 9.

Example 15

In Example 9, the polymer was replaced with PEN-H (limiting viscosity 0.4 (dl/g), produced by Idemitsu Kosan Co., Ltd.), the magnetic powder was replaced with neodium series magnetic powder and the discharging pressure was changed to 0.1 to 1.8 $kg/cm^2$, and polymer coating was carried out in the same manner as in Example 9 under an inert atmosphere of argon stream.

Example 16

In Example 9, the polymer was replaced with PEN-N (limiting viscosity 0.3 (dl/g), produced by Idemistu Kosan Co., Ltd.), the magnetic powder was replaced with neodium series magnetic powder and the discharging pressure was changed to 0.1 to 1.8 $kg/cm^2$, and polymer coating was carried out in the same manner as in Example 9 under an inert atmosphere of argon stream.

Example 17

In Example 9, the polymer was replaced with PEN-B (limiting viscosity 0.5 (dl/g), produced by Idemistu

Kosan Co., Ltd.), the magnetic powder was replaced with neodium series magnetic powder and the discharging pressure was changed to 0.1 to 1.8 kg/cm$^2$, and polymer coating was carried out in the same manner as in Example 9 under an inert atmosphere of argon stream.

Example 18

Into 200 ml of N-methyl-2-pyrrolidone was dissolved 18 g of PEN-R (limiting viscosity 0.6 (dl/g), produced by Idemitsu Kosan Co., Ltd.) at 200°C, and the solution was added dropwise over 5 minutes into an apparatus supplied therein 982 g of ferrited powder preheated to 190°C under high speed dispersion and stirring. Then while the mixture was cooling to room temperature by flowing water in the jacket, it was dispersed, mixed and stirred by setting an agitator to 1500 rpm. At the same time, solvent removal was also carried out at 130°C and by coexisting balls to effect grinding, whereby polymer coated magnetic powder was prepared. A hundred balls made of alumina and having a diameter of 10 mm were used.

Example 19

In Example 18, the polymer was changed from PEN-R to PEN-H (limiting viscosity 0.4 (dl/g), produced by Idemitsu Kosan Co., Ltd.),.and polymer coating was carried out in the same manner as in Example 18.

Example 20

In Example 18, the polymer was changed from PEN-R to PEN-N (limiting viscosity 0.3 (dl/g), produced by Idemitsu Kosan Co., Ltd.), and polymer coating was carried out in the same manner as in Example 18.

Example 21

In Example 18, the polymer was cchanged from PEN-R to PEN-B (limiting viscosity 0.5 (dl/g), produced by Idemitsu Kosan Co., Ltd.), and polymer coating was carried out in the same manner as in Example 18.

Example 22

In Example 18, the magnetic powder was replaced with neodium series magnetic powder, and polymer coating was carried out in the same manner as in Example 18.

Example 23

In Example 18, the magnetic powder was replaced with samarium cobalt series magnetic powder, and polymer coating was carried out in the same manner as in Example 18.

Examples 24 to 32

Into 120 ml of N-methylpyrrolidone as a solvent was dissolved 18 g of the following resins by heating to 200°C under stirring to obtain a hot solution. 15 g/dl of this hot solution was cooled to room temperature to prepare a solid material (gel).

Next, 982 g of the following magnetic powders and the previously prepared gel (15 g/dl) containing a solvent were supplied in a disperser and dispersing and mixing were carried out with an agitator at 1000 rpm. Thereafter, while carrying out vacuum drying at 30°C, grinding with an agitator at 1500 rpm (in the copresence of 100 balls made of alumina having a diameter of 10 mm) and simultaneously with solvent removal were carried out to prepare resin coated magnetic powder. Provided that when a rare earth series magnetic powder was used, supplying was effected under inert atmosphere.

Kinds of magnetic powder and a resin

Example 24 Ferrite magnetic powder and PEN-R gel (limiting viscosity of PEN-R 0.6 (dl/g))

Example 25 Ferrite magnetic powder and PEN-N gel (limiting viscosity of PEN-N 0.3 (dl/g))

Example 26 Ferrite magnetic powder and PEN-H gel (limiting viscosity of PEN-H 0.4 (dl/g))

Example 27 Ferrite magnetic powder and PEN-8 gel (limiting viscosity of PEN-B 0.5 (dl/g))

Example 28 Neodium series magnetic powder and PEN-R gel (limiting viscosity of PEN-R 0.6 (dl/g))

Example 29 Neodium series magnetic powder and PEN-H gel (limiting viscosity of PEN-H 0.4 (dl/g))

Example 30 Neodium series magnetic powder and PEN-B gel (limiting viscosity of PEN-B 0.5 (dl/g))

Example 31 Samarium cobalt series magnetic powder and PEN-R gel (limiting viscosity of PEN-R 0.6 (dl/g))

Example 32 Samarium cobalt series magnetic powder and PEN-H gel (limiting viscosity of PEN-H 0.4 (dl/g))

b. Grinding step

The ferrite magnetic resin-coated powder obtained in the above Examples 3 to 6, and 9 to 12 were effected grinding twice by using a grinding machine (produced by Fuji Powdal K.K., Sample mill) at 10000 rpm, respectively, and the rare earth series magnetic resin-coated powder obtained in Examples 7, 9, and 13 to 17 were effected grinding once by useing the same machine and flowing a liquid nitrogen with copresence thereof at 6000 rpm, respectively.

c. Compression molding step

The anisotropic ferrite magnetic resin-coated powder of the above Examples 3 to 6, and 9 and 12 after grinding, and the anisotropic ferrite magnetic polymer-coated powder obtained in Examples 18 to 21, and 24 to 27 were subjected to compression molding at room temperature and an applied pressure of 3 ton/cm$^2$ in a magnetic field of 10 koe.

The anisotropic samarium cobalt magnetic polymer-coated powder of the above Examples 8 and 14 after grinding, and the anisotropic samarium cobalt magnetic polymer-coated powder obtained in Examples 23, 31 and 32 were subjected to compression molding at room temperature and an applied pressure of 6 ton/cm$^2$ in a magnetic field of 15 kOe.

The isotropic neodium magnetic polymer-coated powder of the above Examples 7 and 13 after grinding, and the isotropic neodium magnetic polymer-coated powder obtained in Examples 22, and 28 to 30 were subjected to compression molding at room temperature and an applied pressure of 7 ton/cm$^2$ in a non-magnetic field.

A test piece for measuring thermal deformation temperature mentioned hereinafter was molded to a square pillar shape having 8 x 14 x 7 mm and a test piece for measuring bending strength was molded to a shape of 40 x 4 x 3 mm, respectively.

d. Thermal treatment

With respect to each magnet after the above compression molding, it was exposed at 350 °C for 3 minutes and then at 260 °C for 5 minutes, however those using the polymer coated powder of the magnets in Examples 18 to 23 were previously dried at 150 °C for one hour under reduced pressure to remove the residual solvent in the molded material.

e. Magnetization

A magnetic field of 15 kOe was applied to the anisotropic ferrite magnet, and 20 kOe was applied to the rare earth series.

Regarding each magnet thus prepared, various experiments were carried out and the results are shown in Table 4. The experimental conditions are as follows:

Bending strength: according to JIS-R1601.

Thermal deformation temperature: according to ASTM-D648.

Load 18.6 $kg/cm^2$.

Compression strength: according to JIS-K7208.

Table 4

| | Thermal deformation temperature (°C) | Water absorbing ratio ($10^{-3}$%) | Linear expansion coefficient (cm/cm°C)$\times10^{-6}$ | Bending strength ($kg/cm^2$) | Residual magnetic flux density Br(KG) | Specific coercive force iHc(kOe) | Maximum energy product $(BH)_{max}$(MGOe) | Coated polymer amount (wt %) |
|---|---|---|---|---|---|---|---|---|
| Example 3 | 330 | 5.0 | 3.6 | 700 | 2.54 | 2.27 | 1.45 | 2.2 |
| Example 4 | 340 | 4.8 | 3.5 | 650 | 2.55 | 2.28 | 1.47 | 2.1 |
| Example 5 | 355 | 5.3 | 3.5 | 600 | 2.53 | 2.29 | 1.49 | 2.0 |
| Example 6 | 345 | 4.6 | 3.4 | 600 | 2.52 | 2.30 | 1.46 | 2.2 |
| Example 7 | 332 | 4.8 | 3.6 | 750 | 6.10 | 8.22 | 8.10 | 1.7 |
| Example 8 | 335 | 4.7 | 3.8 | 800 | 8.50 | 10.60 | 16.70 | 1.8 |
| Example 9 | 335 | 4.8 | 3.3 | 650 | 2.48 | 2.30 | 1.47 | 1.7 |
| Example 10 | 342 | 4.7 | 3.4 | 620 | 2.50 | 2.35 | 1.49 | 1.8 |
| Example 11 | 357 | 5.2 | 3.1 | 610 | 2.55 | 2.27 | 1.49 | 1.8 |
| Example 12 | 360 | 4.5 | 3.5 | 610 | 2.56 | 2.32 | 1.52 | 1.7 |

Table 4 (Continued)

| | Thermal deformation temperature (°C) | Water absorbing ratio ($10^{-3}$%) | Linear expansion coefficient (cm/cm°C)x$10^{-6}$ | Bending strength (kg/$cm^2$) | Residual magnetic flux density Br(KG) | Specific coercive force iHc(kOe) | Maximum energy product $(BH)_{max}$(MGOe) | Coated resin amount (wt %) |
|---|---|---|---|---|---|---|---|---|
| Example 13 | 332 | 4.6 | 3.7 | 720 | 6.20 | 8.25 | 8.30 | 1.7 |
| Example 14 | 333 | 4.5 | 3.5 | 750 | 8.52 | 10.80 | 16.85 | 1.7 |
| Example 15 | 335 | 4.8 | 3.8 | 730 | 6.25 | 8.30 | 8.32 | 1.7 |
| Example 16 | 358 | 4.6 | 3.6 | 740 | 6.30 | 8.27 | 8.30 | 1.7 |
| Example 17 | 353 | 4.5 | 3.5 | 760 | 6.20 | 8.25 | 8.28 | 1.7 |
| Example 18 | 330 | 5.1 | 3.7 | 740 | 2.74 | 2.57 | 1.55 | 1.5 |
| Example 19 | 330 | 4.9 | 3.6 | 690 | 2.75 | 2.58 | 1.60 | 1.8 |
| Example 20 | 355 | 5.2 | 3.6 | 640 | 2.73 | 2.59 | 1.59 | 1.8 |
| Example 21 | 353 | 4.5 | 3.5 | 650 | 2.72 | 2.50 | 1.62 | 1.8 |
| Example 22 | 330 | 4.6 | 3.7 | 790 | 6.40 | 8.42 | 8.80 | 1.7 |
| Example 23 | 332 | 4.8 | 3.9 | 830 | 8.80 | 11.35 | 17.30 | 1.7 |

Table 4 (Continued)

| | Thermal deformation temperature (°C) | Water absorbing ratio ($10^{-3}$%) | Linear expansion coefficient (cm/cm°C)x$10^{-6}$ | Bending strength (kg/$cm^2$) | Residual magnetic flux density Br(KG) | Specific coercive force iHc(kOe) | Maximum energy product $(BH)_{max}$ (MGOe) | Coated resin amount (wt %) |
|---|---|---|---|---|---|---|---|---|
| Example 24 | 330 | 4.9 | 3.5 | 680 | 2.54 | 2.27 | 1.45 | 1.7 |
| Example 25 | 355 | 4.7 | 3.4 | 630 | 2.55 | 2.28 | 1.47 | 1.8 |
| Example 26 | 340 | 5.2 | 3.3 | 580 | 2.53 | 2.29 | 1.49 | 1.7 |
| Example 27 | 354 | 4.5 | 3.4 | 560 | 2.52 | 2.30 | 1.46 | 1.7 |
| Example 28 | 328 | 4.7 | 3.5 | 720 | 6.10 | 8.22 | 8.10 | 1.7 |
| Example 29 | 342 | 4.7 | 3.6 | 710 | 6.25 | 8.30 | 8.32 | 1.6 |
| Example 30 | 355 | 4.5 | 3.7 | 690 | 6.20 | 8.25 | 8.30 | 1.7 |
| Example 31 | 333 | 4.6 | 3.6 | 740 | 8.50 | 10.60 | 16.70 | 1.8 |
| Example 32 | 341 | 4.4 | 3.1 | 730 | 8.52 | 10.80 | 16.85 | 1.8 |

Also, regarding the magnet wherein the PEN-R-coated magnetic powder obtained in the above Example 7 was subjected to the above grinding, compression molding in a non-magnetic field, heat treatment and magnetization treatment, chemical resistance, dimensional stability with a lapse of time and dimensional stability at molding were evaluated. The results of chemical resistance are shown in Table 5.

The chemical resistance was according to JIS-K7114 and visual inspection and measurements of changes in weight and dimension were carried out.

Also, regarding the dimensional stablity with a lapse of time (test piece: approximate dimention 8 x 14 x 7 mm, in outer air), a changed ratio of dimension (maximum value of dimensional ratio changed within one month) was 0.002 %, and regarding the dimensional stability at molding, a changed ratio of dimension after heat treatment was 0.015 %.

Here, the above changed ratio in dimension and the changed ratio in dimension after heat treatment are as follows:

$$\text{Changed ratio in dimension } (\%) = \frac{\text{Dimension at present} - \text{Standard dimension}}{\text{Standard dimension}} \times 100$$

(Standard dimension: Dimension immediately after heat treatment (room temperature)

$$\text{Changed ratio in dimension after heat treatment } (\%) = \frac{\text{Dimension after heat treatment} - \text{Dimension before heat treatment}}{\text{Dimension before heat treatment}} \times 100$$

Table 5

| Chemicals | Chemical resistance | Chemicals | Chemical resistance |
|---|---|---|---|
| Hydrochloric acid (10 %) | ◎ | Toluene | ◎ |
| Sulfuric acid (10 %) | ◎ | Xylene | ◎ |
| dil. Nitric acid (5 %) | ◎ | Methyl alcohol | ◎ |
| conc. aqueous ammonia | ◎ | Butyl alcohol | ◎ |
| Saline (saturated) | ◎ | Formalin | ◎ |
| Potassium carbonate (saturated) | ◎ | Acetone | ◎ |
| Formic acid (10 %) | ◎ | Methyl alcohol | ◎ |
| Acetic acid | ◎ | Ethyl acetate | ◎ |
| Pyridine | ◎ | Diethyl ether | ◎ |
| Benzene | ◎ | Trichloroethylene | ◎ |
| | | Carbon tetrachloride | ◎ |
| ◎ : No change in weight and dimension. | | | |

## Claims

1. A magnetic composition which comprises a polymer having a repeating unit represented by the formula:

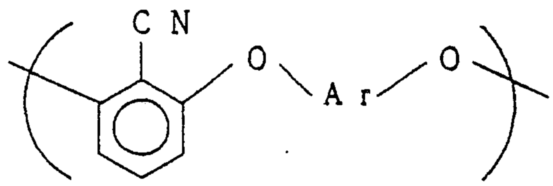

wherein Ar represents

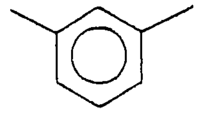, 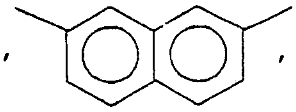,

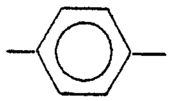 or 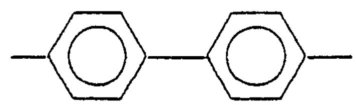

and a limiting viscosity [η] in p-chlorophenol as a solvent at 60°C of 0.2 dl/g or more, and magnetic powder.

2. A magnetic composition which comprises 0.5 to 40 % by volume (0.1 to 15% by weight) of the polymer of Claim 1 and 99.5 to 60 % by volume (99.9 to 85% by weight) of magnetic powder surface treated with a coupling agent.

3. A magnetic powder material which comprises 99.5 to 60% by volume (99.9 to 85% by weight) of magnetic powder to which 0.5 to 40% by volume (0.1 to 15% by weight) of the polymer of Claim 1 is coated or adhered.

4. A magnetic powder material according to Claim 3, wherein the magnetic powder is surface treated with 0 to 5% by weight of a coupling agent based on the magnetic powder.

5. A resin-bonded type magnet comprising an injection molding material of the magnetic powder material of Claim 3.

6. A resin-bonded type magnet comprising a compression molding material of the magnetic powder material of Claim 3.

7. A method for preparing a magnetic powder material according to Claim 3, which comprises adding a bad solvent of the polymer of Claim 1 to a mixture of the polymer dissolved therein and magnetic powder dispersed therein.

8. A method for preparing a magnetic powder material according to Claim 3, which comprises volatilizing and evaporating a solvent of the polymer of Claim 1 in a mixture of the polymer dissolved therein and magnetic powder dispersed therein.

9. A method for preparing a magnetic powder material according to Claim 3, which comprises cooling a mixture of the polymer of Claim 1 dissolved therein and magnetic powder dispersed therein.

10. A method for preparing a magnetic powder material according to Claim 3, which comprises effecting dispersion, mixing and grinding of a gel prepared by dissolving the polymer of Claim 1 in a solvent by heating and then cooling, with magnetic powder, and simultaneously effecting volatilization and evaporation of the solvent.

11. A method according to any of Claims 7 to 10, wherein said magnetic powder is surface treated with 0 to 5% by weight of a coupling agent.

12. A method for preparing a resin-bonded type magnet which comprises effecting compression molding of the magnetic powder material according to Claim 3.

13. A method for preparing a resin-bonded type magnet which comprises effecting injection molding of the magnetic powder material according to Claim 3.

14. A method for preparing a resin-bonded type magnet which comprises effecting compression molding of the magnetic powder material according to Claim 3 under the condition of applying a magnetic field.

15. A method according to Claim 12 or 14, wherein the magnetic powder material of Claim 3 is subjected to grinding treatment.

16. A magnetic composition according to Claim 1, wherein the polymer has a repeating unit represented by the formula.

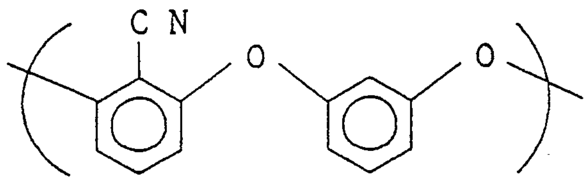

17. A magnetic powder material according to Claim 3, wherein the polymer has a repeating unit represented by the formula.

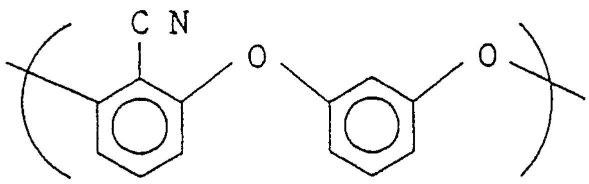

18. A resin-bonded type magnet according to 5 or 6, wherein the polymer has a repeating unit represented by the formula.